# EUROPEAN PATENT SPECIFICATION

(11) **EP 1 304 821 B1**
(45) Date of publication and mention of the grant of the patent: **15.04.2009**
(21) Application number: 02022879.7
(22) Date of filing: 14.10.2002
(51) Int. Cl.: H04J 3/06

(54) **Radio communication method, device and system**
Verfahren, Vorrichtung und System zur Funkübertragung
Procédé, dispositif et système de communication radio

(30) Priority: 13.10.2001 GB 0124639
(43) Date of publication of application: 23.04.2003
(73) Proprietor: MOTOROLA, INC., Schaumburg, IL 60196 (US)
(72) Inventor: Serfaty, Salomon, Doar Gaash 60951 (IL); Brody, Rafael, Ganei-Tikwa 55900 (IL)
(74) Representative: McCormack, Derek James

(56) References cited:
- WO-A-02/01775
- "Specification of the Bluetooth system, wireless connections made easy, Core, Version 1.1" SPECIFICATION OF THE BLUETOOTH SYSTEM, VERSION 1.1, vol. 1, 22 February 2001 (2001-02-22), pages 1,92-125, XP002223350
- PALOWIRELESS BLUETOOTH RESOURCE CENTER: "Reasons for Using a DV Packet"[Online] 21 September 2000 (2000-09-21), XP002354333 Retrieved from the Internet: URL:http://www.palowireless.com/infotooth/ knowbase/baseband/143.asp> [retrieved on 2005-11-16]
- SPAKER R: "BLUETOOTH BASICS" EMBEDDED SYSTEMS PROGRAMMING, MILLER FREEMAN, SAN FRANCISCO, CA, US, vol. 13, no. 7, July 2000 (2000-07), pages 57-58,60,62,6, XP000983337 ISSN: 1040-3272

## Description

### Field of the Invention

This invention relates to a radio communication method, device and system. In particular, it relates to performing synchronisation in a communication system that includes asynchronous links between devices. The invention is applicable to, but not limited to, Bluetooth communication systems.

### Background of the Invention

Radio communication systems are known in which devices or communication units operate according a protocol in which one of the devices is designated as a master device and another is designated as a slave device for radio communications between the two. Furthermore, a plurality of types of communication links between the master device and the slave device may be supported. A first one of the types of links may comprise an asynchronous connectionless link and a second one of the types of link may comprise synchronous connection-oriented links. One such communication system is Bluetooth, as defined in the Specification of the Bluetooth System (Core) Version 1.1 February 22 2001.

Bluetooth is a short-range communication system that was initially conceived as a wireless replacement to connect peripherals to a host device such as a computer or central processing unit. Bluetooth supports two types of link:
- ACL: Asynchronous connectionless link, used mainly for data.
- SCO: Synchronous connection oriented link, mainly used for speech communication, using for voice encoding CVSD (continuous variable slope delta) at 64 kbps.

Bluetooth is organised in piconets and each piconet has a master (master device). Any other device participating in the piconet is consequently made a slave (slave device) of this master. For example, in the case of a central computer and peripheral devices, a radio communications device associated with the computer is designated as the master device and up to seven other radio communications devices associated with peripherals to the computer may serve in the piconet as slave devices in communication with the master device. Transmissions are time-slotted with frequency hopping. The slot duration is equal to 625 µsec. Transmissions alternate between master and slaves. The master uses the even numbered slots for transmitting while the slaves use odd numbered slots. A slave cannot transmit on an ACL link in a Bluetooth piconet unless polled by the master in the previous slot.

By its very nature, asynchronous communications cannot guarantee a constant delay between the request for transmission from say a master and the reception of the information by a slave. This non-constant delay could be as a result of:
(i) queuing at the bottom of the stack in the transmission queue; or
(ii) link manager protocol actions, that can use part of the slots for management purpose as an example, power control of the slave.

In supervision and control systems, there is a need for accurate real time synchronization in the order of a millisecond between devices involved in the system. Events occurring in an input/output (I/O) device are normally tagged with a real time stamp and transmitted to the processing unit, normally a remote terminal unit (RTU) or a central unit, for further processing.

Bluetooth could conceivably be used in a such a control and supervision system as a wire replacement for connecting I/O devices or units to a remote terminal unit (RTU) or for connecting one or more RTUs to a central unit. However, in order to apply Bluetooth in such a system, there is a need for accurate time synchronisation between the units using Bluetooth protocols. A procedure for such accurate synchronisation does not exist in the prior art. Synchronisation in the prior art is carried out as defined in the reference 'Specification of the Bluetooth system, Wireless connections made easy, Core Version 1.1, Volume 1, 22 February 2001, pages 92 to 125. A master unit and slave units have internal clocks which are kept synchronised by the master unit communicating its internal clock periodically to the slave units and the slave units applying an offset to their internal clocks.

Owing to the asynchronous nature of the ACL link, that link cannot be used to provide satisfactory synchronisation of the units for some applications such as supervision and control systems. In particular, delays in transmittal of synchronisation or timing signals cannot be estimated and hence cannot be compensated for. On the other hand, the SCO, although synchronous, is normally used only to transmit signals representing speech.

A need therefore exists for a more accurate time synchronisation method in communication systems such as Bluetooth.

### Summary of the invention

According to the present invention in a first aspect there is provided a method of operation as defined in claim 1 of the accompanying claims.

In the method according to the first aspect of the invention the first device may be master device and the second device may be a slave device.

In the method according to the first aspect of the invention, the first timing signal is desirably an audio frequency signal, e.g. an audio frequency single or periodic packet. The audio frequency signal may conveniently comprise a chirp signal. The chirp signal may be a periodic chirp signal although it could be a single chirp signal. The audio signal may be detected by the second device and/or by the first device, if retransmitted by the second device, by use of a detector which includes an audio frequency filter. The audio frequency filter may beneficially comprise a matched filter.

In the method according to the first aspect of the invention the first device may transmit using the asynchronous link a signal indicating a stored time value related to a predetermined position on a waveform, e.g. an audio signal as described above, of the first timing signal sent by the first device. The stored time value may conveniently be related to an end point on the waveform of the timing signal.

If the first timing signal is a periodic timing signal and is determined to have been transmitted multiple times from the first device to the second device, the first device may restart the synchronisation method. Alternatively, the second device may store the number of multiple times and the first device may determine and transmit to the second device an additional correction factor based on the number of elapsed periods.

In the method according to the first aspect of the invention, prior to sending of the timing signal, a synchronous link and an asynchronous link are established between the first device and the second device and a control signal is sent from the first device to the second device on the asynchronous link indicating that a synchronisation procedure between the devices is to begin.

The method according to the first aspect of the invention may advantageously be applied in a communication system which comprises a Bluetooth communication system.

The first device may be a master device which is in communication with a plurality of slave devices and the method according to the invention may conveniently be applied to synchronise the master device with each of the slave devices.

According to the present invention in a second aspect there is provided a communication system as defined in claim 15 of the accompanying claims.

Such a system may comprise a supervision and control system for an industrial process or operation.

According to the present invention in a third aspect there is provided a radio device as defined in claim 17 of the accompanying claims. Such a device may comprise or may be included in a unit such as a remote terminal for use in an industrial control system.

The present invention surprisingly and beneficially provides a method to synchronise real time clocks in communicating radio devices, especially devices that operate as a Bluetooth system, using a combination of SCO and ACL links. This synchronisation method allows synchronisation time accuracies better that 1msec to be achieved. Such accuracies are highly advantageous in communications systems for use in certain applications, for example supervision and control systems and other applications requiring precise real-time clock synchronisation.

Embodiments of the present invention will now be described by way of example with reference to the accompanying drawings, in which:

### Brief Description of the Drawings

Figure 1 is a flowchart showing the process steps performed in a synchronising method embodying the present invention in a Bluetooth system;
Figure 2 shows an SCO link using HV3 packets in slots;
Figure 3 shows two periods of a chirp signal;
Figure 4 schematically illustrates a matched filter output that results from applying a matched filter to a received chirp signal; and
Figure 5 shows a transmission by a master device of a DH1 packet and a transmission by a slave device of an acknowledgement (ACK).

### Description of embodiments of the invention

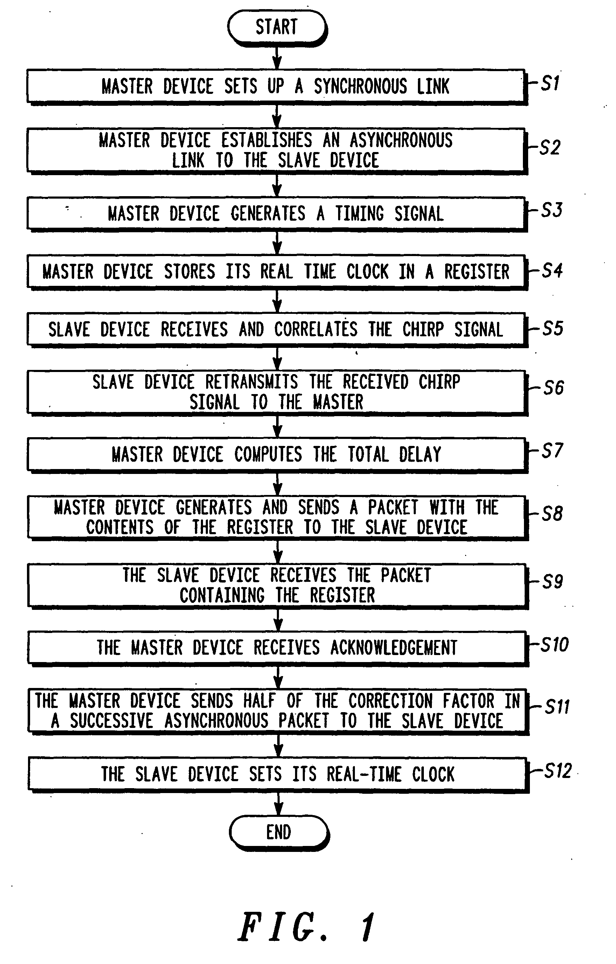

In an exemplary embodiment, the communication system is a Bluetooth system, the master device, hereinafter called 'master', is a Remote Terminal Unit, and the slave device, hereinafter called 'slave' is an input/output device. (It will be appreciated that the invention may however be applied to other communication systems and/or types of devices.) Figure 1 is a flowchart showing the process steps performed in a synchronising method used in the system. The master is configured to send a real time clock with a precision of, say, a millisecond to one or more of its slaves.

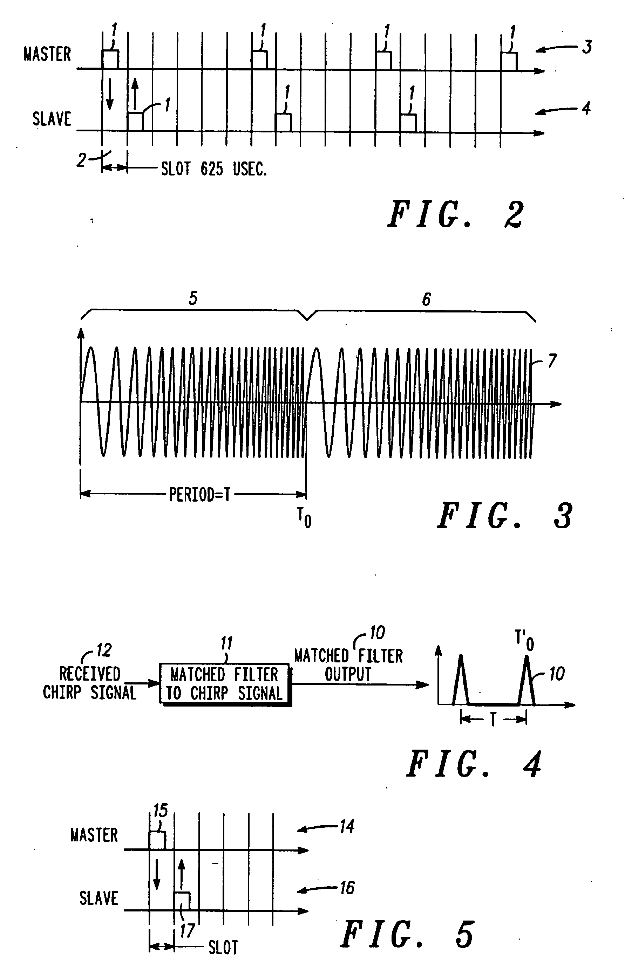

As shown in Figure 1, at step s1 the master sets up an SCO link between the master and the slave. This SCO link is preferably established using an HV3 data packet structure, as defined in the Bluetooth specification (Section 4.4.2.3). HV3 type packets are designed to transmit voice using Continuously Variable Slope Delta Modulator (CVSD), as defined in the Bluetooth specification (Section 12.2), with no error protection in the data generated by the CVSD encoder. HV3 packets have a periodicity of six in a Bluetooth Piconet, meaning that one out of six slots in each direction is reserved for this connection. This is depicted in Figure 2, which shows the SCO link including HV3 packets 1, in 625 µsec slots 2. The top "row" 3 in Figure 2 shows the packets sent from the master and the bottom "row" 4 shows the packets sent from the slave.

At step s2 shown in Figure 1, performed in parallel with step s1, the master establishes an ACL link to the slave, preferably using Data High Rate of Type 1 (DH1) packets, as defined in the Bluetooth specification (Section 4.4.3.2). DH1 packets can transport up to 28 information bytes per slot. The master indicates on this ACL link to the slave, using a signal in a conventional control signalling slot, that a time synchronisation process is about to start.

(In other embodiments, other types of packets such as HV2 for voice information and DM3, DH5, DM5 etc. for the data portion may be used.)

At step s3, using the SCO link, the master generates a timing signal. Since under Bluetooth this signal needs to be transmitted as an audio frequency radio signal, it has to be within the passband of the audio path between the two devices, namely, 300-3400 Hz.

In a simple implementation the generated signal may be a single tone with a frequency of f0 Hz. However, in this embodiment, more precision is achieved by using a chirp signal within the passband of the audio path. We will assume that the transmitted signal is a continuously varying chirp signal that extends anywhere between 300Hz and 3400Hz, for example, 500Hz to 3000Hz.

The characteristics of the chirp signal should be known to the slave. The period of the signal should be chosen so that at most one cycle of the chirp occupies a single HV3 packet. Since an HV3 packet transports 240 bits of audio information sampled at a rate of 64 kbps, the period should be larger than 3.75msec. This supposes no restriction and can be made in the order of tens of milliseconds.

At step s4, at the end of the generated period of the chirp signal, the master stores its real time clock in a register R₀. This instant is denoted T₀ in Figure 3, which also shows two periods 5,6 of the chirp signal 7.

At step s5, the slave receives the chirp signal and correlates it with a filter matched to that signal. Further, the slave time stamps the chirp signal, using its own real time clock (which we may assume has the same precision as the clock of the master device), the occurrence of the maximum of the output of the matched filter. In addition, the slave stores the time in a register, say R₁ for every new received period.

Figure 4 schematically illustrates the result of applying the matched filter 11 to the received chirp signal. It may be noted that, owing to delays in filtering and CVSD processing at both the transmitter and receiver, this time may be different from T₀; we call it T'₀. It may also be noted that the stored times in R₁ are of the form (T'₀ +nT) where T is the period of the chirp waveform and n is an integer.

At step s6, performed at the same time as step s5, using the same SCO link, the slave retransmits the received chirp signal to the master (audio loop-back). We can assume that the delay in the audio path from the master to the slave is almost identical to that in the slave to master path.

At step s7, the master computes the total delay by observing the returned chirp signal (using for example a matched filter to the chirp signal). Let us assume that this delay is equal to *T*. It is assumed that the delay *T* is much smaller than the period T of the chirp.

At step s8, the master generates a packet with the contents of the register R₀ and sends it, using the previously established ACL link to the slave, immediately after T₀.

One of the requirements of Bluetooth is that when a master sends a packet to a slave in a slot, the slave must acknowledge the reception of the packet in the next slot. This is depicted in Figure 5, which shows in a top "row" 14 transmission by the master of a DH1 packet 15 and in a bottom "row" 16 transmission by the slave of an acknowledgement (ACK) 17. Although when a packet is put the queue for transmission, there may be a delay before transmission. Thus, the transmitter is not certain when the packet will be transmitted, as explained earlier. It is assumed however that the ACK to that transmission follows immediately after the packet is transmitted.

As illustrated in Figure 2, the ACL link of the master has two opportunities to transmit between two consecutive SCO packets.

At step s9, the packet containing the register R₀ is received by the slave. The slave stops recording the times as described with respect to step s5 above.

At step s10, the master receives the ACK prior to the transmission of the next end of the period of the chirp signal. The master is thus assured that the chirp signal and the real time stamp have been received by the slave.

To correct for the delay *T*, as explained earlier, at step s11 the master sends half of this correction factor (*T*/2) in a successive ACL packet to the slave. The master informs the slave of the end of the transmission of synchronisation data.

At step s12, the slave uses the time stored in R₁, the received R₀ and the correction factor *T*/2 to set its real-time clock.

It could happen that owing to excessive delays in the transmitting queue in the master, the ACL packet that carries the contents of register R₀ is sent several periods T after the intended time. In this event, there are several alternative actions that can be taken, for example as follows.

In a first option, the master, after detecting too much delay in the reception of the ACK, may abort the synchronisation process and restart it.

A second option is for the slave to store the consecutive times in a first-in first-out (FIFO) like configuration (T'₀ + nT) stopping the process once the packet with register R₀ is received. Once the master receives the ACK, it calculates the number of complete periods that have elapsed from the instant T₀ and communicates that in a following ACL packet to the slave. The slave may then extract the information from its FIFO according to the number of periods elapsed.

A third simpler option is to send a single chirp (non-repetitive) and perform a similar process.

In all the cases, we have illustrated a method to synchronise real time clocks in a piconet that operates under a Bluetooth system using a combination of SCO and ACL links. This synchronisation method allows synchronisation time accuracies better that 1 msec to be achieved. Such accuracies are highly beneficial in systems for certain applications, for example supervisory and control systems and other applications requiring precise real-time clock synchronisation.

Devices to serve as the master and slave in a Bluetooth system are known per se. It will be readily apparent to those skilled in the art how such devices should be adapted to implement the present invention. In general, such devices include a radio signal transmitter, a radio receiver and a signal processor. Timing and logical decisions required in the method according to the invention may be carried out in a manner known per se by the signal processor. Audio frequency signal generator and corresponding matched filter circuits required in an embodiment of the invention are also known per se. Substitution of the output of an audio frequency generator for an audio frequency speech signal usually applied in a master device is also a simple task well within the normal capability of those having ordinary skill in the art.

## Claims

1. A method of synchronisation between a first device and a second device having between them a first radio communication link which is a connectionless asynchronous link and a second radio communication link which is a connection-oriented synchronous link; the method comprising the first device and the second device communicating to provide an alignment of an internal clock of the second device with that of the first device, the method being **characterised by** the following steps:
(i) the first device sending to the second device by the asynchronous link a signal indicating the start of a synchronisation process; (ii) the first device generating (S3) a first timing signal, transmitting the first timing signal to the second device by the synchronous link and recording (S4) a time of transmitting the first timing signal;(iii) the second device receiving (S5) and recording a time of receiving the first timing signal; (iv) the second device sending (S6) in response to receiving the first timing signal from the first device a second timing signal to the first device by the synchronous link; (v) in response to receiving the second timing signal from the second device, the first device computing (S7) the time delay taken for the first and second timing signals to travel between the first device and the second device; (vi) the first device sending (S8) to the second device by the asynchronous link an indication of the time of transmitting the first timing signal, the first device receiving the acknowledgement from the second device (S10); (vii) the first device sending to the second device by the asynchronous link an indication of the time delay computed by the first device; and (viii) the second device setting (S12), in response to receiving (S9) from the first device the indication of the time of the first device transmitting the first timing signal and to receiving (S11) the indication of the computed delay time delay, its clock using the received indications and the recorded time of receiving the first timing signal, thereby to end the synchronisation process.

2. A method according to claim 1, wherein the first timing signal generated and transmitted by the first device comprises a synthesised audio frequency signal.

3. A method according to claim 2 and wherein the second timing signal transmitted by the second device comprises a re-transmission (S6) of the audio frequency signal received from the first device.

4. A method according to claim 2 or claim 3 and wherein the audio frequency signal comprises a periodic signal packet.

5. A method according to any one of claims 2 to 4 wherein the audio frequency signal comprises a single signal packet.

6. A method according to any one of claims 2 to 5 wherein the audio frequency signal comprises a chirp signal (12).

7. A method according to any one of claims 2 to 6 wherein the audio signal is detected by the second device and/or by the first device by use of a detector which includes an audio frequency filter.

8. A method according to claim 7 and wherein the audio frequency filter comprises a matched filter (11).

9. A method according to any one of claims 2 to 8 and wherein the time of transmission of the first timing signal recorded by the first device relates to a predetermined position on a waveform of the first timing signal.

10. A method according to claim 9 and wherein the predetermined position relates to an end point on the waveform of the timing signal.

11. A method according to any one of the preceding claims wherein the first timing signal is a periodically repeating signal and the second device records a time of receipt of each period of the signal.

12. A method according to any one of the preceding claims and wherein if the first timing signal is a periodic timing signal and is determined to have been transmitted multiple times from the first device to the second device, the first device restarts the synchronisation method.

13. A method according to any one of claims 1 to 11 and wherein, if the first timing signal is a periodic timing signal and is determined to have been transmitted multiple times from the first device to the second device, the second device stores the number of multiple times and sends an acknowledgement to the first device and the first device calculates in response a number of periods that have elapsed following recording of the first timing signal and transmits to the second device an additional correction factor based on the number of elapsed periods.

14. A method according to any one of the preceding claims, wherein the method is carried out to provide synchronisation between devices in a Bluetooth communication system.

15. A communication system including a master device and a plurality of slave devices, wherein the master device acting as a first device and each of the slave devices acting as second devices are operable to establish mutual synchronisation by the method according to any one of the preceding claims.

16. A system according to claim 15 and which comprises a supervision and control system for an industrial process.

17. A radio communication device operable to perform the process steps performed by the first device and/or the second device in a method according to any of claims 1 to 14.

## Patentansprüche

1. Verfahren zum Synchronisieren zwischen einer ersten Vorrichtung und einer zweiten Vorrichtung, zwischen denen sich eine erste Funkkommunikationsverbindung, die eine verbindungslose asynchrone Verbindung ist, und eine zweite Funkkommununikationsverbindung, die eine verbindungsorientierte synchrone Verbindung ist, befinden; wobei das Verfahren umfasst, dass die erste Vorrichtung und die zweite Vorrichtung kommunizieren, um eine Synchronisierung eines internen Taktes der zweiten Vorrichtung mit dem der ersten Vorrichtung zur Verfügung zu stellen, wobei das Verfahren durch die folgenden Schritte **gekennzeichnet** ist:
(i) die erste Vorrichtung sendet ein Signal, das den Beginn eines Synchronisierungsprozesses anzeigt, durch die asynchrone Verbindung an die zweite Vorrichtung; (ii) die erste Vorrichtung erzeugt (S3) ein erstes Timingsignal, überträgt das erste Timingsignal durch die synchrone Verbindung zu der zweiten Vorrichtung und zeichnet eine Zeit eines Übertragens des ersten Timingsignals auf (S4) ;
(iii) die zweite Vorrichtung empfängt (S5) und zeichnet eine Zeit eines Empfangens des ersten Timingsignals auf;
(iv) die zweite Vorrichtung sendet (S6) in Reaktion auf ein Empfangen des ersten Timingsignals von der ersten Vorrichtung ein zweites Timingsignal durch die synchrone Verbindung zu der ersten Vorrichtung; (v) in Reaktion auf ein Empfangen des zweiten Timingsignals von der zweiten Vorrichtung berechnet (S7) die erste Vorrichtung die Zeitverzögerung, die für das erste und das zweite Timingsignal benötigt wird, um sich zwischen der ersten Vorrichtung und der zweiten Vorrichtung fortzubewegen; (vi) die erste Vorrichtung sendet (S8) durch die asynchrone Verbindung an die zweite Vorrichtung eine Anzeige der Zeit eines Übertragens des ersten Timingsignals und die erste Vorrichtung empfängt die Bestätigung von der zweiten Vorrichtung (S10); (vii) die erste Vorrichtung sendet durch die asynchrone Verbindung zu der zweiten Vorrichtung eine Anzeige der durch die erste Vorrichtung berechneten Zeitverzögerung; und (viii) die zweite Vorrichtung stellt, in Reaktion auf ein Empfangen (S9) von der ersten Vorrichtung der Anzeige der Zeit, zu der die erste Vorrichtung das erste Timingsignal überträgt, und auf ein Empfangen (S11) der Anzeige der berechneten Zeitverzögerung, ihren Takt unter Verwendung der empfangenen Anzeigen und der aufgezeichneten Zeit eines Empfangens des ersten Timingsignals ein (S12), wodurch der Synchronisierungsprozess beendet wird.

2. Verfahren gemäß Anspruch 1, wobei das durch die erste Vorrichtung erzeugte und übertragene Timingsignal ein synthetisiertes Audiofrequenzsignal umfasst.

3. Verfahren gemäß Anspruch 2, wobei das durch die zweite Vorrichtung übertragene Timingsignal eine Neuübertragung (S6) des von der ersten Vorrichtung empfangenen Audiofrequenzsignals umfasst.

4. Verfahren gemäß Anspruch 2 oder Anspruch 3, wobei das Audiofrequenzsignal ein periodisches Signalpaket umfasst.

5. Verfahren gemäß einem der Ansprüche 2 bis 4, wobei das Audiofrequenzsignal ein einzelnes Signalpaket umfasst.

6. Verfahren gemäß einem der Ansprüche 2 bis 5, wobei das Audiofrequenzsignal ein Zwitschersignal (12) umfasst.

7. Verfahren gemäß einem der Ansprüche 2 bis 6, wobei das Audiofrequenzsignal durch die zweite Vorrichtung und/oder durch die erste Vorrichtung unter Verwendung eines Detektors detektiert wird, der einen Audiofrequenzfilter umfasst.

8. Verfahren gemäß Anspruch 7, wobei der Audiofrequenzfilter einen angepassten Filter (11) umfasst.

9. Verfahren gemäß einem der Ansprüche 2 bis 8, wobei die Zeit einer Übertragung des durch die erste Vorrichtung aufgezeichneten ersten Timingsignals einer vorbestimmten Position auf einer Wellenform des ersten Timingsignals entspricht.

10. Verfahren gemäß Anspruch 9, wobei die vorbestimmte Position einem Endpunkt auf der Wellenform des Timingsignals entspricht.

11. Verfahren gemäß einem der vorangehenden Ansprüche, wobei das erste Timingsignal ein sich periodisch wiederholendes Signal ist und die zweite Vorrichtung eine Zeit eines Empfangs einer jeden Periode des Signals aufzeichnet.

12. Verfahren gemäß einem der vorangehenden Ansprüche, wobei die erste Vorrichtung das Synchronisierungsverfahren neu startet, wenn das erste Timingsignal ein periodisches Timingsignal ist und bestimmt worden ist, mehrere Male von der ersten Vorrichtung zu der zweiten Vorrichtung übertragen worden zu sein.

13. Verfahren gemäß einem der Ansprüche 1 bis 11, wobei, wenn das erste Timingsignal ein periodisches Timingsignals ist und bestimmt worden ist, mehrere Male von der ersten Vorrichtung zu der zweiten Vorrichtung übertragen worden zu scin, die zweite Vorrichtung die Zahl von mehreren Malen speichert und eine Bestätigung an die erste Vorrichtung sendet und die erste Vorrichtung in Reaktion darauf eine Zahl von Perioden berechnet, die nach einem Aufzeichnen des ersten Timingsignals verstrichen sind, und einen zusätzlichen Korrekturfaktor, der auf der Zahl verstrichener Perioden basiert, zu der zweiten Vorrichtung überträgt.

14. Verfahren gemäß einem der vorangehenden Ansprüche, wobei das Verfahren ausgeführt wird, um eine Synchronisierung zwischen Vorrichtungen in einem Bluetooth-Kommunikationssystem zur Verfügung zu stellen.

15. Kommunikationssystem, das eine Master-Vorrichtung und eine Mehrzahl von Slave-Vorrichtungen umfasst, wobei die Master-Vorrichtung, die als eine erste Vorrichtung agiert, und jede der Slave-Vorrichtungen, die als zweite Vorrichtungen agieren, betreibbar sind, um durch das Verfahren gemäß einem der vorangehenden Ansprüche eine wechselseitige Synchronisierung einzurichten.

16. System gemäß Anspruch 15, das ein Überwachungs- und Steuerungssystem für einen industriellen Prozess umfasst.

17. Funkkommunikations Vorrichtung, die betreibbar ist, um die Verfahrensschritte durchzuführen, die durch die erste Vorrichtung und/oder die zweite Vorrichtung in einem Verfahren gemäß einem der Ansprüche 1 bis 14 durchgeführt werden.

## Revendications

1. Procédé de synchronisation entre un premier dispositif et un deuxième dispositif ayant entre eux une première liaison de communication radio qui est une liaison asynchrone sans connexion et une deuxième liaison de communication radio qui est une liaison synchrone orientée connexion ; le procédé comprenant le fait que le premier dispositif et le deuxième dispositif communiquent pour réaliser un alignement de l'horloge interne du deuxième dispositif avec celle du premier dispositif le procédé étant **caractérisé par** les étapes suivantes :
(i) le premier dispositif envoie au deuxième dispositif, par la liaison asynchrone, un signal indiquant le démarrage d'un processus de synchronisation ; (ii) le premier dispositif génère (S3) un premier signal de base de temps, transmet le premier signal de base de temps au deuxième dispositif, par la liaison synchrone, et enregistre (S4) l'instant de transmission du premier signal de base de temps ; (iii) le deuxième dispositif reçoit (S5) et enregistre l'instant de réception du premier signal de base de temps ; (iv) le deuxième dispositif, en réponse à la réception du premier signal de base de temps du premier dispositif, envoie (S6) un deuxième signal de base de temps au premier dispositif, par la liaison synchrone ; (v) en réponse à la réception du deuxième signal de base de temps du deuxième dispositif, le premier dispositif calcule (S7) le temps de propagation pris par les premier et deuxième signaux de base de temps pour voyager entre le premier dispositif et le deuxième dispositif ; (vi) le premier dispositif envoie (S8) au deuxième dispositif, par la liaison asynchrone, une indication du temps de transmission du premier signal de base de temps, le premier dispositif reçoit l'accusé réception de la part du deuxième dispositif (S10) ; (vii) le premier dispositif envoie au deuxième dispositif, par la liaison asynchrone, une indication du temps de propagation calculé par le premier dispositif ; et (viii) le deuxième dispositif, en réponse à la réception (S9), en provenance du premier dispositif, de l'indication de l'instant de transmission du premier signal de base de temps par le premier dispositif, et à la réception (S11) de l'indication du temps de propagation calculé, règle (S12) son horloge à l'aide des indications reçues et de l'instant enregistré de réception du premier signal de base de temps, ce qui termine le processus de synchronisation.

2. Procédé selon la revendication 1, dans lequel le premier signal de base de temps génère et transmis par le premier dispositif comprend un signal à fréquence audio synthétisé.

3. Procédé selon la revendication 2, et dans lequel le deuxième signal de base de temps transmis par le deuxième dispositif comprend une retransmission (S6) du signal à fréquence audio reçu du premier dispositif.

4. Procédé selon la revendication 2 ou la revendication 3, et dans lequel le signal à fréquence audio comprend un paquet de signal périodique.

5. Procédé selon l'une quelconque des revendications 2 à 4, dans lequel le signal à fréquence audio comprend un unique paquet de signal.

6. Procédé selon l'une quelconque des revendications 2 à 5, dans lequel le signal à fréquence audio comprend un signal modulé en fréquence (12).

7. Procédé selon l'une quelconque des revendications 2 à 6, dans lequel le signal audio est détecté par le deuxième dispositif et/ou par le premier dispositif au moyen d'un détecteur qui comprend un filtre de fréquences audio.

8. Procédé selon la revendication 7, et dans lequel le filtre de fréquences audio comprend un filtre adapté (11).

9. Procédé selon l'une quelconque des revendications 2 à 8, et dans lequel l'instant de transmission du premier signal de base de temps enregistré par le premier dispositif est lié à une position prédéterminée sur une forme d'onde du premier signal de base de temps.

10. Procédé selon la revendication 9, et dans lequel la position prédéterminée est liée à un point terminal sur la forme d'onde du signal de base de temps.

11. Procédé selon l'une quelconque des revendications précédentes, dans lequel le premier signal de base de temps est un signal à répétition périodique et le deuxième dispositif enregistre l'instant de réception de chaque période du signal.

12. Procédé selon l'une quelconque des revendications précédentes, et dans lequel, si le premier signal de base de temps est un signal de base de temps périodique et qu'il est déterminé que ce signal a été transmis plusieurs fois par le premier dispositif au deuxième dispositif, le premier dispositif redémarre le procédé de synchronisation.

13. Procédé selon l'une quelconque des revendications 1 à 11, et dans lequel, si le premier signal de base de temps est un signal de base de temps périodique et qu'il est déterminé que ce signal a été transmis plusieurs fois par le premier dispositif au deuxième dispositif, le deuxième dispositif mémorise ce nombre de transmissions multiples et envoie un accusé réception au premier dispositif, et le premier dispositif calcule en réponse un nombre de périodes qui se sont écoulées après l'enregistrement du premier signal de base de temps et transmet au deuxième dispositif un facteur de correction additionnel en fonction du nombre de périodes écoulées.

14. Procédé selon l'une quelconque des revendications précédentes, où le procédé est exécuté pour réaliser une synchronisation entre des dispositifs dans un système de communication Bluetooth.

15. Système de communication comprenant un dispositif maître et une pluralité de dispositifs esclaves, où le dispositif maître, agissant comme un premier dispositif, et chacun des dispositifs esclaves, agissant comme des deuxièmes dispositifs, peuvent établir une synchronisation mutuelle par le procédé selon l'une quelconque des revendications précédentes.

16. Système selon la revendication 15, et qui comprend un système de supervision et de commande pour un processus industriel.

17. Dispositif de radiocommunication pouvant exécuter les étapes de processus exécutées par le premier dispositif et/ou le deuxième dispositif dans un procédé selon l'une quelconque des revendications 1 à 14.
